# EUROPEAN PATENT SPECIFICATION

(11) **EP 3 085 673 B1**
(45) Date of publication and mention of the grant of the patent: **08.05.2019**
(21) Application number: 14871878.6
(22) Date of filing: 05.12.2014
(51) Int. Cl.: C03C 17/34, B32B 9/00, G02B 1/11, G02B 1/115

(54) **GLASS WITH ANTI-REFLECTION FILM AND METHOD FOR MANUFACTURING SAME**
GLAS MIT ANTIREFLEXIONSFILM UND VERFAHREN ZUR HERSTELLUNG DAVON
VERRE À FILM ANTIREFLET ET SON PROCÉDÉ DE FABRICATION

(30) Priority: 16.12.2013 JP 2013259650
(43) Date of publication of application: 26.10.2016
(73) Proprietor: AGC Inc., Tokyo 100-8405 (JP)
(72) Inventor: YAMADA, Tomohiro, Tokyo 100-8405 (JP); ODAKA, Hidefumi, Tokyo 100-8405 (JP); AOMINE, Nobutaka, Tokyo 100-8405 (JP); MIYAGI, Takahira, Tokyo 100-8405 (JP); SUZUKI, Kenichi, Tokyo 100-8405 (JP)
(74) Representative: Müller-Boré & Partner Patentanwälte PartG mbB
(86) International application number: PCT/JP2014/082272
(87) International publication number: WO 2015/093322

(56) References cited:
- WO-A1-2005/030663
- JP-A- H0 667 019
- JP-A- H0 781 977
- JP-A- H03 162 943
- JP-A- S57 124 301
- JP-A- 2001 290 005
- JP-A- 2002 097 572
- JP-A- 2005 274 527
- US-A- 5 183 700
- US-A- 5 800 918
- US-A1- 2007 279 750

## Description

### TECHNICAL FIELD

The present invention relates to a glass with an antireflection film, and a manufacturing method thereof.

### BACKGROUND ART

A glass with an antireflection film has high transparency, and it is expected to be applied, for example, to a facade of a building, and an outdoor building, such as a store and a spot garden.

The glass with the antireflection film is formed by forming a laminated film at least on one surface of a glass substrate. By properly selecting each film included in the laminated film, light reflection reduction effect is obtained, whereby glass with an antireflection film having high transparency can be obtained.

For example, Patent Document 1 discloses that, by forming a laminated film having a TiO₂ layer, an Al-doped SiO₂ layer, a TiO₂ layer, and an Al-doped SiO₂ layer, in this order, on a glass substrate, reflectivity of the glass substrate is reduced.

Patent Document 2 discloses antireflection articles having an outer layer of silica doped with zirconia or silicon zirconium oxynitride. The articles have excellent chemical durability to acids and alkalis.

### PRIOR ART DOCUMENTS

### PATENT DOCUMENTS

Patent Document 1: WO 2005/030663
Patent Document 2: JP-06-067019

### SUMMARY OF THE INVENTION

### PROBLEM TO BE SOLVED BY THE INVENTION

As described above, for a glass with an antireflection film, by properly designing a configuration of a laminated film, high transparency can be exhibited by the glass substrate.

However, for a usual glass with an antireflection film, it may not be said that an alkali-resistance property of the laminated film is favorable.

Consequently, there is a problem that, for a case of applying, for example, to an outdoor building, a usual glass with an antireflection film, the glass with the antireflection film is deteriorated upon contacting moisture including an alkali component, which is included in concrete, for example. Furthermore, if such deterioration occurs in the laminated film, a favorable reflection reduction effect may not be exhibited, and reflectivity of the glass with the antireflection film may be increased.

The present invention is achieved in view of such a circumstance, and an object of the present invention is to provide a glass with an antireflection film having a significant alkali-resistance property, compared to a usual one. Further, it is also an object of the present invention to provide a manufacturing method of such a glass with an antireflection film.

### MEANS FOR SOLVING THE PROBLEM

According to the present invention, there is provided a glass with an antireflection film as defined in claim 1, wherein the glass with the antireflection film includes a glass substrate having a first surface and a second surface, and a first laminated film located on the first surface of the glass substrate, wherein the first laminated film includes, from a side close to the first surface of the glass substrate, a first layer, a second layer, and an outermost layer, wherein the second layer is located adjacent to the first layer, wherein the outermost layer is formed of zirconia-doped silica, and wherein a layer that does not include silica is located immediately below the outermost layer.

Further, according to the present invention, there is provided a manufacturing method of a glass with an antireflection film as defined in claim 11, the method including (1) a step of forming a first layer on a first surface of a glass substrate; (2) a step of forming a second layer immediately above the first layer; (3) a step of forming a third layer immediately above the second layer, wherein the third layer is formed of a layer not including silica; (4) a step of forming a layer formed of zirconia-doped silica immediately above the third layer, wherein the layer formed of zirconia-doped silica is formed by a cylindrical magnetron sputtering method.

### ADVANTAGEOUS EFFECT OF THE INVENTION

According to the present invention, a glass with an antireflection film can be provided, which has a significant alkali-resistance property, compared to a usual one. Further, it is also an object of the present invention to provide a manufacturing method of such a glass with an antireflection film.

### BRIEF DESCRIPTION OF THE DRAWINGS

FIG. 1 is a diagram schematically illustrating a configuration of a glass with a usual antireflection film;
FIG. 2 is a diagram schematically illustrating an example of a configuration of a glass with a first antireflection film not according to the present invention;
FIG. 3 is a diagram schematically illustrating an example of a configuration of a glass with a second antireflection film not according to the present invention;
FIG. 4 is a diagram schematically illustrating an example of a configuration of a glass with a third antireflection film according to the present invention;
FIG. 5 is a diagram schematically illustrating an example of a configuration of a glass with a fourth antireflection film not according to the present invention;
FIG. 6 is a diagram schematically illustrating an example of a configuration of a glass with a fifth antireflection film not according to the present invention;
FIG. 7A is a diagram schematically illustrating an example of a configuration of a glass with a sixth antireflection film not according to the present invention;
FIG. 7B is a flow diagram schematically illustrating an example of a manufacturing method of a glass with an antireflection film according to an embodiment of the present invention;
FIG. 8 is a graph illustrating a change in reflectivity prior to and after a dipping process, which was obtained for a sample according to example 1;
FIG. 9 is a graph illustrating a change in reflectivity prior to and after a dipping process, which was obtained for a sample according to example 2;
FIG. 10 is a graph illustrating a change in reflectivity prior to and after a dipping process, which was obtained for a sample according to example 3;
FIG. 11 is a graph illustrating a change in reflectivity prior to and after a dipping process, which was obtained for a sample according to example 4;
FIG. 12 is a graph illustrating a change in reflectivity prior to and after a dipping process, which was obtained for a sample according to example 5;
FIG. 13 is a graph illustrating a change in reflectivity prior to and after a dipping process, which was obtained for a sample according to example 6; and
FIG. 14 is a graph illustrating a change in reflectivity prior to and after a dipping process, which was obtained for a sample according to example 7.

### EMBODIMENTS FOR IMPLEMENTING THE INVENTION

The present invention is described below in details by referring to accompanying drawings.

### (Glass with a usual antireflection film)

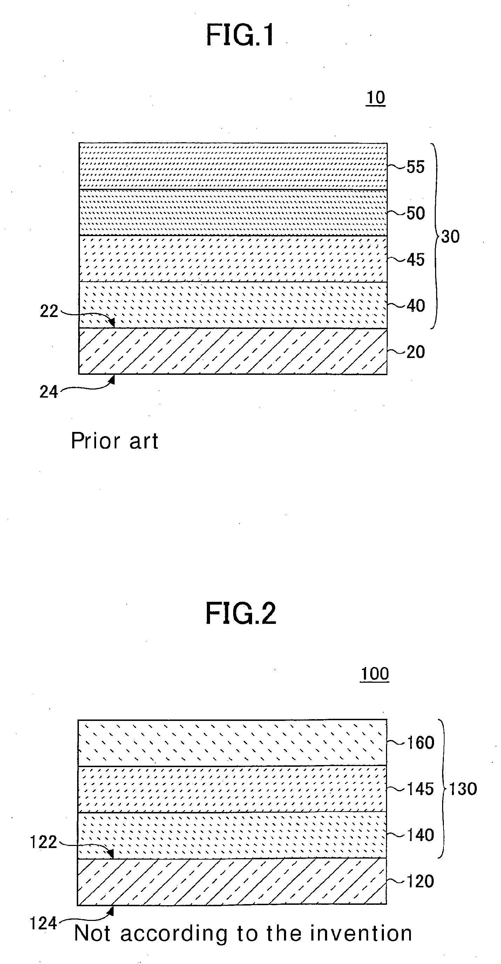

First, in order to better understand a configuration and a feature of glass of the present invention, an example of a configuration of a glass with a usual antireflection film is described by referring to FIG. 1.

FIG. 1 schematically illustrates an example of a configuration of a glass with a usual antireflection film.

As illustrated in FIG. 1, the glass 10 with the usual antireflection film is formed of a glass substrate 20; and a laminated film 30.

The glass substrate 20 is provided with a first surface 22; and a second surface 24. The laminated film 30 is formed at the side of the first surface 22 of the glass substrate 20.

By properly designing a number of layers included in the laminated film 30, material of each layer, and an order of formation, an antireflection property can be exhibited by the laminated film 30. In this manner, the glass 10 with an antireflection film can also be obtained.

Note that, usually, there are various types of laminated films with various configurations, and it is difficult to describe all of them here. Thus, a laminated film having a four-layer structure, such as the one described in above-described Patent Document 1, is described below, as an example.

In this case, as illustrated in FIG. 1, the laminated film 30 is formed by sequentially laminating, from the side closer to the first surface 22 of the glass substrate 20, a first layer 40, a second layer 45, a third layer 50, and a fourth layer 55.

The first layer 40 and the third layer 50 are TiO₂ layers, for example. Additionally, the second layer 45 and the fourth layer 55 are SiO₂ layers, for example. In the SiO₂ layer, another element, such as aluminum, may be doped.

Here, the refractive index of the TiO₂ layer is approximately 2.4. Further, the refractive index of SiO₂ layer is approximately 1.47. Consequently, the laminated film 30 has a repeated structure of high refractive index layers (the first layer 40 and the third layer 50) and low refractive index layers (the second layer 45 and the fourth layer 55), and by this repeated structure, the laminated film 30 can demonstrate the antireflection property.

In this manner, by forming the laminated film 30 on the first surface 22 of the glass substrate 20, the glass 20 with the antireflection film can be obtained.

However, according to the knowledge of the inventors of the present application, a problem with such a glass 10 with a usual antireflection film is that the alkali-resistant property may be insufficient. Consequently, if the glass 10 with the antireflection film is applied, for example, to an outdoor building, the laminated film 30 is deteriorated when the glass 10 with the antireflection film contacts moisture including an alkali component, which is included in concrete, for example. Furthermore, if such deterioration occurs in the laminated film 30, a favorable reflection reduction effect by the laminated film 30 may not be exhibited, so that there is a problem that reflectivity of the glass with the antireflection film increases.

### (Glass with an antireflection film according to the present invention)

In contrast, according to the present invention, there is provided a glass with an antireflection film including a glass substrate having a first surface and a second surface, and a first laminated film formed on the first surface of the glass substrate, wherein the first laminated film includes, from a side close to the first surface of the glass substrate, a first layer, a second layer, and an outermost layer, wherein the second layer is formed adjacent to the first layer, wherein the outermost layer is formed of zirconia-doped silica, and wherein a layer that does not include silica is formed immediately below the outermost layer.

The zirconia-doped silica layer (which may also be referred to as "ZrO₂ doped SiO₂ layer," hereinafter) indicates a favorable alkali-resistance property. Thus, in the glass with the antireflection film according to the present invention, the ZrO₂ doped SiO₂ layer at the outermost layer of the laminated film functions as a protection layer against alkaline matter. Thus, even if the laminated film contacts moisture including an alkali component, the laminated layer can be significantly prevented from being deteriorated.

Thus, according to the present invention, a glass with an antireflection film can be provided, which has a significantly high alkali-resistant property, compared to a usual one.

However, the inventors of the present application have found that, if a silica layer is located immediately below the ZrO₂ doped SiO₂ layer, the alkali-resistant property of such a laminated film is lowered.

To avoid the above-described problem, a second feature of the present invention is that a silica layer is not located immediately below the ZrO₂ doped SiO₂ layer, namely, a layer that does not include silica is formed immediately below the ZrO₂ doped SiO₂ layer.

In this case, deterioration of the alkali-resistant property of the glass with the antireflection film can be significantly suppressed. Note that, in the present application, the term "outermost layer" means the layer at the outermost in the laminated film formed to exhibit the antireflection function. Thus, it should be noted that another one layer or two or more layers formed not to affect the antireflection function (e.g., a transparent protection layer) may further be placed above the "outermost layer." In other words, the term "outermost layer" is used to represent the relative positional relationship in the laminated film for exhibiting the antireflection function, so that the "outermost layer" in the glass with the antireflection film may not be the layer that is at the outermost.

### (Glass with the antireflection film)

Next, a structure of a glass with an antireflection film not according to the present invention (which is referred to as the "glass with the first antireflection film," hereinafter) is described by referring to FIG. 2.

As illustrated in FIG. 2, the glass 100 with the first antireflection film includes a glass substrate 120; and a laminated film 130.

The glass substrate 120 is provided with a first surface 122 and a second surface 124; and the laminated film 130 is located at the side of the first surface 122 of the glass substrate 120.

In the example illustrated in FIG. 2, the laminated film 130 is formed of three layers, namely, it includes a first layer 140; a second layer 145; and an outermost layer 160.

The first layer 140 has a refractive index that is greater than the refractive index of the second layer 145. For example, the first layer 140 has the refractive index that is greater than or equal to 2.0; and the second layer 145 has the refractive index that is in a range from 1.4 to 1.8. The second layer is formed of a layer other than silica.

By using the two layers 140 and 145 having different refractive indexes in the laminated film 130, the glass 100 with the first antireflection film can be caused to have a low reflection property.

Here, the outermost layer 160 is formed of zirconia-doped silica, namely, it is the ZrO₂ doped SiO₂ layer.

Due to the existence of the ZrO₂ doped SiO₂ layer at the outermost layer 160, the glass 100 with the first antireflection film provided with such a structure can exhibit a significantly enhanced alkali-resistant property, compared to the usual glass with the antireflection film.

Furthermore, in the glass 100 with the first antireflection film, the silica layer is not located immediately below the outermost layer 160, namely, the ZrO₂ doped SiO₂ layer. Consequently, in the glass 100 with the first antireflection film, the alkali-resistant property can be significantly prevented from being deteriorated with time.

### (Glass with another antireflection film)

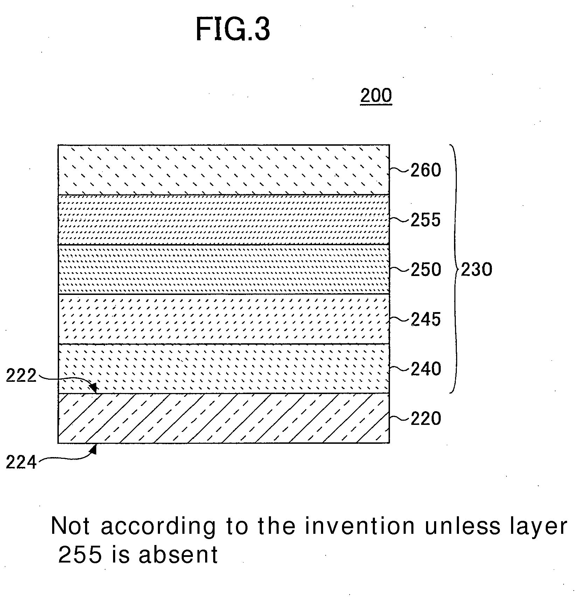

Next, a structure of another glass with an antireflection film (which is referred to as the "glass with the second antireflection film," hereinafter) which is not according to the present invention is described by referring to FIG. 3.

As illustrated in FIG. 3, the glass 200 with the second antireflection film has a structure similar to the structure of the glass 100 with the first antireflection film illustrated in FIG. 2. Thus, in the glass 200 with the second antireflection film, for components that are the same as the components of the glass 100 with the first antireflection film, reference numerals that are obtained by adding 100 to the reference numerals illustrated in FIG. 2 are used. For example, the glass 200 with the second antireflection film is provided with a glass substrate 220; and a laminated film 230.

However, in the glass 200 with the second antireflection film, the structure of the laminated film 230 is different from the structure of the laminated film 130 of the above-described glass 100 with the first antireflection film.

More specifically, as illustrated in FIG. 3, the laminated film 230 is formed of five layers, namely, a first layer 240, a second layer 245, a third layer 250, a fourth layer 255, and an outermost layer 260.

Here, the first layer 240, the second layer 245, and the outermost layer 260 are provided with the structures that are the same as the above-described first layer 140, the second layer 145, and the outermost layer 160, respectively.

However, it should be noted that the second layer 245 is different from the second layer 145 of the glass 100 with the first antireflection film, and the second layer 245 can be a silica layer. The reason is that the fourth layer 255 is located immediately below the outermost layer 260, and that the second layer 245 does not directly contact the outermost layer 260.

The third layer 250 has a refractive index that is greater than a refractive index of the adjacent second layer 245, for example, a refractive index greater than or equal to 2.0. Here, a composition of the third layer 250 may be the same as a composition of the first layer 240.

Further, the fourth layer 255 has a refractive index that is less than the refractive index of the adjacent third layer 250, for example, the refractive index in a range from 1.4 to 1.8. Here, a composition of the fourth layer 255 may be the same as a composition of the second layer 245, as long as the fourth layer 255 is not a silica layer.

By using the laminated layer 230 provided with a set of the first layer 240 and the second layer 245 having respective different refractive indexes, and a set of the third layer 250 and the fourth layer 255 having respective different refractive indexes, the glass 200 with the second antireflection film can be caused to have a low reflection property.

Here, it should be apparent to a person ordinarily skilled in the art that, for the glass 200 with the second antireflection film, an effect that is the same as the effect of the glass 100 with the first antireflection film, i.e., a significantly enhanced alkali-resistant property is obtained, compared to the usual glass with the antireflection film.

Note that, in the example illustrated in FIG. 3, the laminated film 230 of the glass 200 with the second antireflection film is formed of the five layers from the first layer 240 to the outermost layer 260.

However, the laminated film 230 is formed of four layers according to claim 1. In this case, for example, in the laminated film 230 illustrated in FIG. 3, the fourth layer 255 is omitted.

Alternatively, the laminated layer 230 may be formed of six or more layers, which is outside the scope of the present invention. For example, in the laminated film 230 illustrated in FIG. 3, one additional layer or two or more additional layers may be located between the fourth layer 255 and the outermost layer 260. In this case, these additional layers may include one or more sets of a high refractive index layer and a low refractive index layer.

### (Each component forming the glass with the antireflection film according to the present invention)

Next, each component forming the glass with the antireflection film according to the present invention is described in details.

Here, each component is described by exemplifying the glass 200 with the second antireflection film illustrated in FIG. 3. Thus, for representing the components, the reference numerals indicated in FIG. 3 are used. However, it is apparent to a person ordinarily skilled in the art that the following descriptions can be similarly applied to the glass 100 with the first antireflection film illustrated in FIG. 2, and further to the glass with the antireflection film, which is indicated below.

### (Glass substrate 220)

The glass substrate 220 is provided with the first surface 222, and the second surface 224; and the laminated film 230 is formed on the first surface 222.

The composition of the glass substrate 220 is not particularly limited. The glass substrate 220 may be a non-alkaline glass, a soda-lime glass, and an aluminosilicate glass, for example. Additionally, the glass substrate 220 may be physically strengthened or chemically strengthened. If the glass is chemically strengthened, the plate thickness of the glass can be less than or equal to 1.5 mm. For example, a glass substrate of a chemically strengthened soda-lime glass includes, in terms of mass% on the basis of oxides, 60 to 75% SiO₂; 2 to 12% Al₂O₃; 2 to 11% MgO; 0 to 10% CaO; 0 to 3% SrO; 0 to 3% BaO; 10 to 18% Na₂O; 0 to 8% K₂O; and 0 to 4% ZrO₂ (the total of the above-described components is less than or equal to 100% and usually greater than or equal to 95%). Further, a glass substrate of a chemically strengthened aluminosilicate glass includes, in terms of mass% on the basis of oxides, 61 to 70% SiO₂; 1 to 18% Al₂O₃; 0 to 15% MgO; 0 to 5% CaO; 0 to 1% SrO; 0 to 1% BaO; 8 to 18% Na₂O; 0 to 8% K₂O; 0 to 6% K₂O; 0 to 4% ZrO₂; and 0 to 8% B₂O₃.

### (Laminated film 230)

The laminated film 230 includes, from the side of the glass substrate 220, the first layer 240; the second layer 245; the third layer 250; the fourth layer 255, ... Here, the laminated film 230 is provided with the outermost layer 260, i.e., the ZrO₂ doped SiO₂ layer at the uppermost portion.

Here, since the first layer 240 has the refractive index that is greater than the refractive index of the second layer 245, the first layer 240 is referred to as a "high refractive index layer" 240; the second layer 245 is referred to as a "low refractive index layer" 245; and both of them are referred to as a "different refractive index pair."

In this case, for the example of FIG. 2, a number of the different refractive index pairs in the laminated film 130 is one (three layers in total); and for the example of FIG. 3, a number of the different refractive index pairs in the laminated film 230 is two (five layers in total). The number of the different refractive index pairs may be greater than or equal to 3 (seven layers in total).

The high refractive index layer (the third layer 250) is immediately below the outermost layer 260. Here, when the third layer 250 (the high refractive index layer) is immediately below the outermost layer 260, the number of the different refractive index pairs can be written as 1.5.

According to this notation, the number of the different refractive index pairs in the laminated film 230 may be 2.5, 3.5, 4.5, ..., and so forth, which is outside the scope of the present invention.

### (First layer 240)

The first layer 240 has the refractive index that is greater than the refractive index of the second layer 245, which is located immediately above.

The first layer 240 may have a refractive index that is greater than or equal to 2.0, for example. The refractive index of the first layer 240 may be greater than or equal to 2.1, for example.

As material forming such a "high refractive index layer" 240, for example, there are titania, niobium oxide, zirconia, ceria, and tantalum oxide, though the material is not limited to them.

The thickness of the first layer 240 is in a range from 5 nm to 20 nm, for example; and preferably in a range from 7 nm to 17 nm.

### (Second layer 245)

The second layer 245 has the refractive index that is less than the refractive index of the first layer 240, which is located immediately below. Further, if the number of the different refractive index pairs is greater than or equal to 1.5, the second layer 245 has the refractive index that is less than the refractive index of the third layer 245, which is located immediately above.

The second layer 245 may have, for example, a refractive index in a range from 1.4 to 1.8. The refractive index of the second layer 245 may be, for example, in a range from 1.45 to 1.7.

As material forming such a "low refractive index layer" 245, for example, there are silica and alumina, though the material is not limited to them. In silica, another element, such as aluminum, may be doped. However, if the number of the different refractive index pairs is one, which is outside the scope of the present invention, the second layer 245 is required to be a layer other than silica.

The thickness of the second layer 245 is in a range from 15 nm to 45 nm, for example; and preferably in a range from 20 nm to 40 nm.

### (Third layer 250)

If, in the laminated film 230, the number of the different refractive index pairs is greater than or equal to 1.5, there exists the third layer 250.

The third layer 250 has the refractive index that is greater than the refractive index of the second layer 245, which is located immediately below. Further, if the number of the different refractive index pairs is greater than or equal to 2.0, which is outside the scope of the present invention, the third layer 250 has the refractive index that is greater than the refractive index of the fourth layer 245, which is located immediately above.

The third layer 250 may have, for example, a refractive index that is greater than or equal to 2.0. The refractive index of the third layer 250 may be, for example, greater than or equal to 2.1.

The thickness of the third layer 250 is in a range from 45 nm to 125 nm, for example; and preferably in a range from 50 nm to 115 nm.

The third layer 250 may be formed of material that is the same as the material of the first layer 240, and includes a material selected from the group formed of titania, niobium oxide, zirconia, ceria and tantalum oxide. The third layer 250 may have the same refractive index as the refractive index of the first layer 240.

### (Fourth layer 255)

If, in the laminated film 230, the number of the different refractive index pairs is greater than or equal to 2.0, there exists the fourth layer 255, which is outside the scope of the present invention.

The fourth layer 255 has the refractive index that is less than the refractive index of the third layer 250, which is located immediately below. Further, if the number of the different refractive index pairs is greater than or equal to 2.5, which is outside the scope of the present invention, the fourth layer 255 has the refractive index that is less than the refractive index of the fifth layer, which is located immediately above.

The fourth layer 255 may have, for example, a refractive index in a range from 1.4 to 1.8. The refractive index of the fourth layer 255 may be, for example, in a range from 1.45 to 1.7.

As material forming such a "low refractive index layer" 255, for example, there are silica and alumina, though the material is not limited to them. In silica, another element, such as aluminum, may be doped.

The thickness of the fourth layer 255 is in a range from 0 nm to 110 nm, for example; and preferably in a range from 0 nm to 100 nm.

The fourth layer 255 may be formed of material that is the same as the material of the second layer 245, and the fourth layer 255 may have the same refractive index as the refractive index of the second layer 245. However, if the number of the different refractive index pairs is two, which is outside the scope of the present invention, the second layer 245 is required to be a layer other than silica.

### (Fifth and subsequent layers)

Each of the fifth layer, the sixth layer, ..., and the n-th layer (n is an integer greater than or equal to 5), if they exist, which would be outside the scope of the present invention, and the adjacent layer may mutually form a different refractive index pair.

For example, the fifth layer has the refractive index that is greater than the refractive index of the fourth layer and the reflective index of the sixth layer; the sixth layer has the refractive index that is less than the refractive index of the fifth layer and the refractive index of the seventh layer, and so on.

As for the specifications of these layers, reference may be made to the descriptions of the above-described column for the first layer 240, and the column for the second layer 245.

### (Outermost layer 260)

As described above, the outermost layer 260 is formed of the ZrO₂ doped SiO₂ layer.

The thickness of the outermost layer 260 is not particularly limited; however, the thickness of the outermost layer 260 may be in a range from 5 nm to 110 nm, for example; and may be in a range from 10 nm to 100 nm, for example.

The zirconia doping amount is in the range from 5 at% to 50 at%. If the zirconia doping amount is greater than or equal to 5 at%, the alkali-resistant property of the laminated film 230 is enhanced. The lower limit of the zirconia doping amount is, for example, 6 at%; preferably 7 at%; more preferably 8 at%; and further more preferably 9 at%. Whereas, if the zirconia doping amount is less than or equal to 50 at%, the acid-resistant property is enhanced. The zirconia doping amount may preferably be in a range from 10 at% to 33 at%.

If the zirconia doping amount is 5 at%, the refractive index of the outermost layer 260 is approximately 1.50; if the zirconia doping amount is 10 at%, the refractive index of the outermost layer 260 is approximately 1.54; if the zirconia doping amount is 33 at%, the refractive index of the outermost layer 260 is approximately 1.69; and if the zirconia doping amount is 50 at%, the refractive index of the outermost layer 260 is approximately 1.79.

Each layer forming the laminated film may be formed by any method. Each layer may be formed by an evaporation method, a sputtering method, a CVD (chemical vapor deposition) method, and so forth. The outermost layer is formed by cylindrical magnetron sputtering.

### (Another glass with an antireflection film according to an embodiment of the present invention)

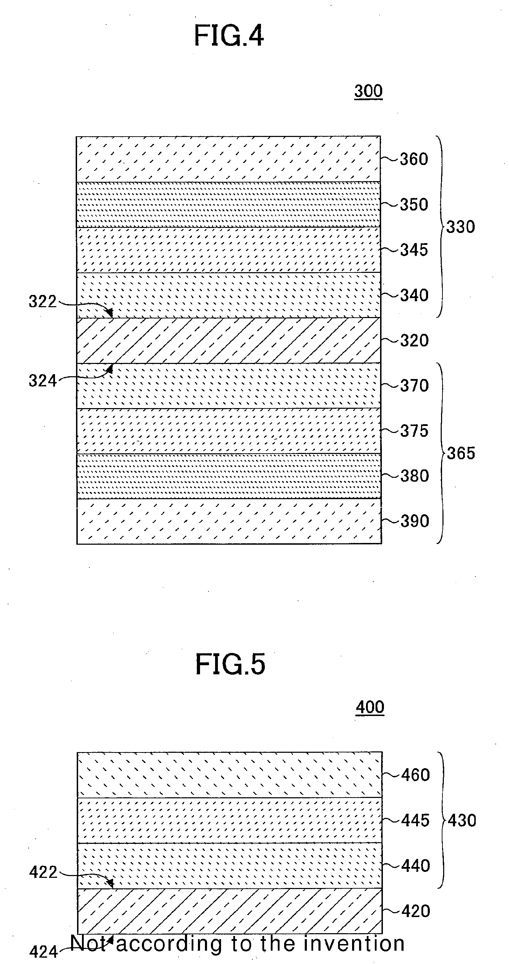

Next, a structure of a glass with an antireflection film according to an embodiment of the present invention (which is referred to as the "glass with the third antireflection film") is described by referring to FIG. 4.

As illustrated in FIG. 4, the glass 300 with the third antireflection film includes a glass substrate 320; a first laminated film 330; and a second laminated film 365.

The glass 300 with the third antireflection film includes the components that are the same as the components of the glass 200 with the second antireflection film, which is illustrated in FIG. 3. Thus, in the glass 300 with the third antireflection film, for the components that are the same as the components of the glass 200 with the second antireflection film, reference numerals that are obtained by adding 100 to the reference numerals illustrated in FIG. 3 are used.

However, the glass 300 with the third antireflection film is different from the structure of the glass 200 with the second antireflection film in that laminated films are formed on both surfaces 323 and 324 of the glass substrate 320.

More specifically, as illustrated in FIG. 4, a first laminated film 330 is located at the side of the first surface 322 of the glass substrate 320, and a second laminated film 365 is located at the side of the second surface 324 of the glass substrate 320.

In the example illustrated in FIG. 4, the first laminated film 330 is formed of four layers in total, and the number of the different refractive index pairs is 1.5. Namely, the first laminated film 330 includes a first layer 340 as the "high refractive index layer," a second layer 345 as the "low refractive index layer," a third layer 350 as the "high refractive index layer," and a first outermost layer 360.

Similarly, the second laminated film 365 is formed of four layers in total, and the number of the different refractive index pair is 1.5. Namely, the second laminated film 365 includes a first layer 370 as the "high refractive index layer," a second layer 375 as the "low refractive index layer," a third layer 380 as the "high refractive index layer," and a second outermost layer 390.

In the glass 300 with the third antireflection film, the first laminated film 330 and the second laminated film 365 located at respective sides of the glass substrate 320 have different refractive index pairs. Consequently, in the glass 300 with the third antireflection film, a more favorable low reflection property can be exhibited.

Here, it should be apparent to a person ordinarily skilled in the art that, due to the existence of the first outermost layer 360 and the second outermost layer 390, even for the glass 300 with the third antireflection film, the effect that is the same as those of the glass 100 with the first antireflection film and the glass 200 with the second antireflection film, namely, a significantly enhanced alkali-resistant property is obtained, compared to the usual glass with the antireflection film.

In the example illustrated in FIG. 4, the first laminated film 330 of the glass 300 with the third antireflection film is formed of the four layers, which are from the first layer 340 to the outermost layer 360.

Further, in the example illustrated in FIG. 4, the second laminated film 365 is provided with the layered structure that is the same as the layered structure of the first laminated film 330. However, this is merely an example, and the second laminated film 365 may be provided with any structure, as long as the low reflection property can be exhibited.

For example, the second laminated film 365 may be provided with a structure, such as those of the laminated films 30, 130, and 230, which are illustrated in FIGS. 1 to 3, respectively.

Further, the second laminated film 365 is not always required to have the outermost layer 390, which is formed of the ZrO₂ doped SiO₂ layer; and any layer may be positioned as the second outermost layer.

For example, if it is assumed that the glass 300 with the third antireflection film is used as a window glass for a building, an alkaline component may hardly flow from the concrete due to rain on the indoor side. Thus, if the glass with the antireflection film is installed, so that the side of the laminated film that does not include the outermost layer formed of the ZrO₂ doped SiO₂ layer faces the indoor side, a phenomena hardly occurs where the laminated film is deteriorated by the alkaline component, whereby the low reflection property of the glass with the antireflection film can be prevented from being lowered.

However, if both surfaces of the glass substrate are provided with respective outermost layers, which are formed of the ZrO₂ doped SiO₂ layers, the laminated film can be significantly prevented from being deteriorated by the alkaline component, regardless of which side faces the outdoor side. Consequently, for the case of the glass 300 with the third antireflection film, such as that of shown in FIG. 4, the glass with the antireflection film can be used without paying attention to the direction of the glass substrate 320.

### (Another glass with an antireflection film)

Next, a structure of another glass with an antireflection film not according to the present invention (which is referred to as the "glass with the fourth antireflection film") is described by referring to FIG. 5.

As illustrated in FIG. 5, the glass 400 with the fourth antireflection film is provided with a structure that is the same as the structure of the glass 100 with the first antireflection film, which is illustrated in FIG. 2. Namely, the glass 400 with the fourth antireflection film includes a glass substrate 420; and a laminated film 430, and the laminated film 430 is formed of three layers, which are a first layer 440, a second layer 445, and an outermost layer 460.

However, in the glass 400 with the fourth antireflection film, the structure of the laminated film 430 is different from the structure of the laminated film 130 of the above-described glass 100 with the first antireflection film.

More specifically, the first layer 440 of the laminated film 430 has a refractive index which is less than a refractive index of the second layer 445, which is at immediately above; and the second layer 445 has the refractive index which is greater than the refractive index of the first layer 440. Namely, contrary to the laminated film 130, the laminate film 430 includes, from the side close to the glass substrate 420, the "low refractive index layer" and the "high refractive index layer", which are the different refractive index pair.

Even for a case where the laminated film 430 has the different refractive index pair with such a structure, the glass 400 with the fourth antireflection film can be caused to have a low reflection property.

Here, in the laminated film 430, the outermost layer 460 is formed of the above-described ZrO₂ doped SiO₂ layer. Furthermore, no silica layer is formed immediately below the outermost layer 460.

Thus, in the glass 400 with the fourth antireflection film, the effect that is the same as that of the glass 100 with the first antireflection film, namely, a significantly enhanced alkali-resistant property is obtained, compared to the usual glass with the antireflection film.

Here, the first layer 440 of the laminated film 430 may be a "low refractive index layer," such as the second layer 245 of the above-described laminated film 230. A specification of such a "low refractive index layer" is described in the column of the above-described second layer 245. Furthermore, the second layer 445 of the laminated film 430 may be a "high refractive index layer," such as the first layer 240 of the above-described laminated layer 230. A specification of such a "high refractive index layer" is described in the column of the above-described first layer 240.

### (Another glass with an antireflection film)

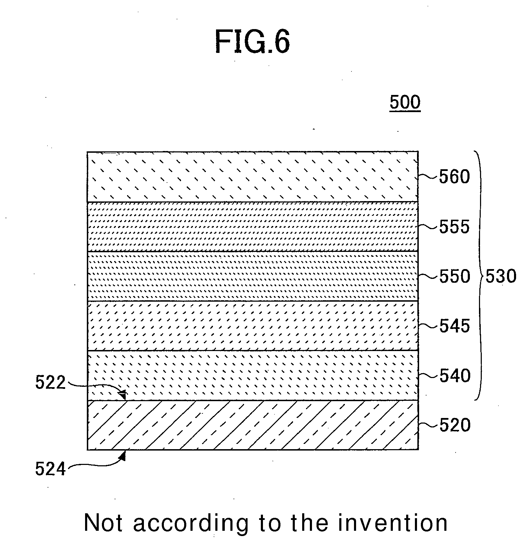

Next, a structure of another glass with an antireflection film not according to the present invention (which is referred to as the "glass with the fifth antireflection film") is described by referring to FIG. 6.

As illustrated in FIG. 6, the glass 500 with the fifth antireflection film is provided with a structure that is the same as the structure of the glass 200 with the second antireflection film, which is illustrated in FIG. 3. Namely, the glass 500 with the fifth antireflection film includes a glass substrate 520; and a laminated film 530, and the laminated film 530 is formed of five layers, which are a first layer 540; a second layer 545; a third layer 550; a fourth layer 555; and an outermost layer 560.

However, in the glass 500 with the fifth antireflection film, the structure of the laminated film 530 is different from the structure of the laminated film 230 of the above-described glass 200 with the second antireflection film.

More specifically, the first layer 540 of the laminated film 530 has a refractive index that is less than a refractive index of the second layer 545, which is at immediately above. Further, the second layer 545 has the refractive index that is greater than the refractive index of the first layer 540 and a refractive index of the third layer 550. Further, the third layer 550 has the refractive index that is less than the refractive index of the second layer 545 and the refractive index of the fourth layer 555; and the fourth layer 555 has the refractive index that is greater than the refractive index of the third layer 550.

Namely, in the glass 500 with the fifth antireflection film, the layer structure of the laminated film 530 is inverted from that of the laminated film 230 of the glass 200 with the second antireflection film, which is illustrated in FIG. 3; and the glass 500 with the fifth antireflection film includes two different refractive index pairs of the "low refractive index layer" and the "high refractive index layer," from the side close to the glass substrate 520.

Even for a case where the laminated film 530 has the different refractive index pairs with such structures, the glass 500 with the fifth antireflection film can be caused to have a low reflection property.

Here, in the laminated film 530, the outermost layer 560 is formed of the above-described ZrO₂ doped SiO₂ layer. Furthermore, no silica layer is formed immediately below the outermost layer 560.

Thus, in the glass 500 with the fifth antireflection film, the effect that is the same as those of the glass 100 with the first antireflection film to the glass 400 with the fourth antireflection film, namely, a significantly enhanced alkali-resistant property is obtained, compared to the usual glass with the antireflection film.

Here, the first layer 540 and the third layer 550 of the laminated film 530 may be "low refractive index layers," such as the second layer 245 of the above-described laminated film 230. A specification of such a "low refractive index layer" is described in the column of the above-described second layer 245. Furthermore, the second layer 545 and the fourth layer 555 of the laminated film 530 may be "high refractive index layers," such as the first layer 240 of the above-described laminated layer 230. A specification of such a "high refractive index layer" is described in the column of the above-described first layer 240.

In the example illustrated in FIG. 6, in the glass 500 with the fifth antireflection film, the laminated film 530 is formed of the five layers, which are the first layer 540 to the outermost layer 560. However, this is merely an example, and is should be noted that the number of the layers forming the laminated film 530 may not be particularly limited, as long as the number of the layers is greater than or equal to 4.

### (Another glass with an antireflection film)

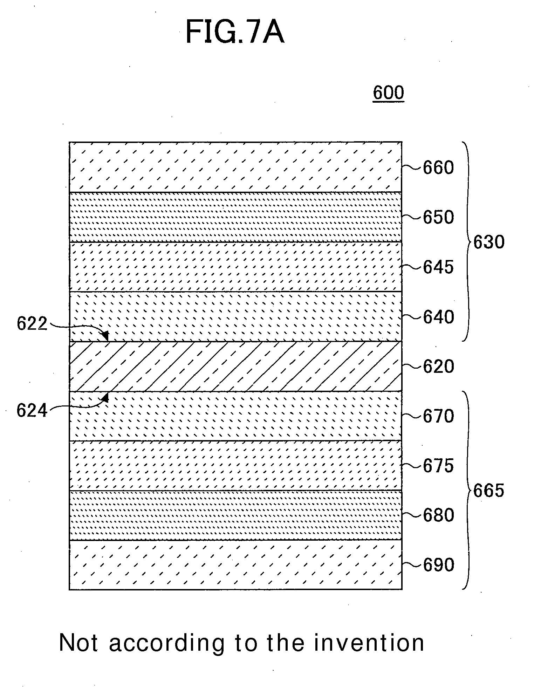

Next, a structure of another glass with an antireflection film not according to the present invention (which is referred to as the "glass with the sixth antireflection film") is described by referring to FIG. 7A.

As illustrated in FIG. 7A, a glass 600 with the sixth antireflection film includes a glass substrate 620; a first laminated film 630; and a second laminated film 665.

The glass 600 with the sixth antireflection film includes the components that are same as the components of the glass 500 with the fifth antireflection film, which is illustrated in FIG. 6. Thus, in the glass 600 with the sixth antireflection film, for the components that are the same as the components of the glass 500 with the fifth antireflection film, reference numerals that are obtained by adding 100 to the reference numerals illustrated in FIG. 6 are used.

However, the glass 600 with the sixth antireflection film is different from the structure of the above-described glass 500 with the fifth antireflection film in a point that laminated films are formed on both surfaces of the glass substrate 620.

More specifically, as illustrated in FIG. 7A, the first laminated film 630 is formed at the side of the first surface 622 of the glass substrate 620, and the second laminated film 665 is formed at the side of the second surface 624 of the glass substrate 620.

In the example illustrated in FIG. 7A, the first laminated film 630 is formed of four layers in total, and the number of the different refractive index pairs is 1.5. Namely, the first laminated film 630 includes a first layer 640 as the "low refractive index layer," a second layer 645 as the "high refractive index layer," a third layer 650 as the "low refractive index layer," and a first outermost layer 660.

Similarly, the second laminated film 665 is formed of four layers in total, and the number of the different refractive index pair is 1.5. Namely, the second laminated film 665 includes a first layer 670 as the "low refractive index layer," a second layer 675 as the "high refractive index layer," a third layer 680 as the "low refractive index layer," and a second outermost layer 690.

In the glass 600 with the sixth antireflection film, the first laminated film 630 and the second laminated film 665 formed at respective sides of the glass substrate 620 have different refractive index pairs. Consequently, in the glass 600 with the sixth antireflection film, a more favorable low reflection property can be exhibited.

Further, the first outermost layer 660 and the second outermost layer 690 are formed of the ZrO₂ doped SiO₂ layers, respectively. Furthermore, no silica layer is located immediately below the first outermost layer 660, and immediately below the second outermost layer 690.

Thus, it should be apparent to a person ordinarily skilled in the art that, in the glass 600 with the sixth antireflection film, the effect that is the same as those of the glass 400 with the fourth antireflection film and the glass 500 with the fifth antireflection film, namely, a significantly enhanced alkali-resistant property is obtained, compared to the usual glass with the antireflection film.

In the example illustrated in FIG. 7A, the first laminated film 630 of the glass 600 with the sixth antireflection film is formed of the four layers, which are from the first layer 640 to the outermost layer 660. However, it is merely an example, and the number of the layers forming the first laminated film 630 is not particularly limited, as long as the number of the layers is greater than or equal to 3.

For example, the first laminated film 630 may be provided with a three layer structure, such as that of the laminated film 430 illustrated in FIG. 5 (the number of the different refractive index pairs = 1). Alternatively, the first laminated film 630 may be provided with a five layer structure, such as that of the laminated film 530 illustrated in FIG. 6 (the number of the different refractive index pairs = 2). Alternatively, the first laminated layer 630 may be formed of six or more layers (the number of the different refractive index pairs ≥ 2.5).

Further, in the example illustrated in FIG. 7A, the second laminated film 665 is provided with the layered structure that is the same as the layered structure of the first laminated film 630. However, this is merely an example, and the second laminated film 665 may be provided with any structure, as long as the low reflection property can be exhibited.

Further, the second laminated film 665 is not always required to have the outermost layer 690, which is formed of the ZrO₂ doped SiO₂ layer; and any layer may be disposed as the second outermost layer.

### (Manufacturing method of the glass with the antireflection film according to an embodiment of the present invention)

Next, an example of a manufacturing method of the glass with the antireflection film according to an embodiment of the present invention is briefly described, which has the above-described features.

Note that the manufacturing method shown below is merely an example, and the glass with the antireflection film according to the present invention may be manufactured by another method. Further, in the following description, by exemplifying a structure where the fourth layer 255 of the laminated film 230 is omitted in the glass 200 with the second antireflection film, which is illustrated in FIG. 3 (i.e., the glass with the antireflection film provided with a laminated film having a four layer structure), the manufacturing method thereof is described, as an example.

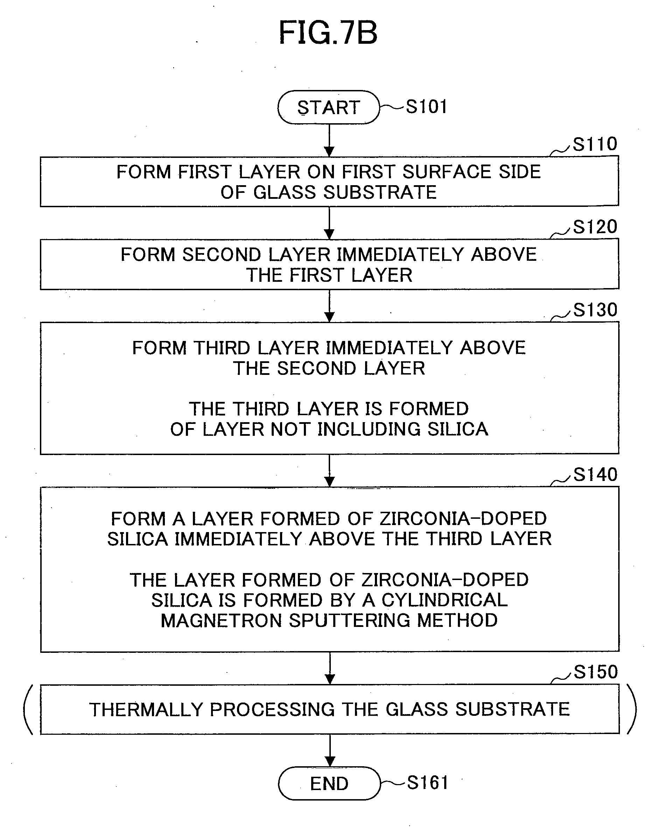

FIG. 7B schematically illustrates an example of a flow of the manufacturing method of such a glass with the antireflection film.

As illustrated in FIG. 7B, the manufacturing method (which is referred to as the "first manufacturing method," hereinafter) includes
a step of forming a first layer on a side of a first surface of a glass substrate (step S110);
a step of forming a second layer immediately above the first layer (step S120);
a step of forming a third layer immediately above the second layer, wherein the third layer is formed of a layer not including silica (step S130);
a step of forming a layer formed of zirconia-doped silica immediately above the third layer, wherein the layer formed of zirconia-doped silica is formed by a cylindrical magnetron sputtering method (step S140); and
a step of thermally processing the glass substrate after step S140 (step S150).

However, step S150 may be omitted.

Each step is described below. Note that, in the following description, for clarity, the reference numerals indicated in FIG. 3 are used for describing each of the components.

### (Step S110)

First, a glass substrate 220 with a first surface 222 and a second surface 224 is prepared. The composition of the glass substrate 220 is not particularly limited. The glass substrate 222 may be, for example, a non-alkaline glass, a soda-lime glass, an aluminosilicate glass, and so forth.

Next, a first layer 240 is formed on a side of the first surface 222 of the glass substrate 220.

As described above, the first layer 240 is formed of a material having a refractive index that is greater than a refractive index of a second layer 245, which is formed at step S120 below. The first layer 240 may be titania, niobium oxide, zirconia, ceria, or tantalum oxide, for example.

The method of forming the first layer 240 is not particularly limited. A film of the first layer 240 may be formed on the first surface 222 of the glass substrate 220, for example, by an evaporation method, a sputtering method, a CVD (chemical vapor deposition) method, and so forth.

### (Step S120)

Subsequently, the second layer 245 is formed immediately above the first layer 240. As described above, the second layer 245 is formed of a material having the refractive index that is less than the refractive index of the first layer 240, and the material has the refractive index that is less than the refractive index of a third layer 255, which is formed at step S130 below. The second layer 245 may be silica or alumina, for example.

The method of forming the second layer 245 is not particularly limited. A film of the second layer 245 may be formed, for example, by an evaporation method, a sputtering method, a CVD (chemical vapor deposition) method, and so forth.

### (Step S130)

Subsequently, the third layer 250 is formed immediately above the second layer 245.

As described above, the third layer 250 is formed of a material having a refractive index that is greater than the refractive index of the second layer 245. The third layer 250 includes titania, niobium oxide, zirconia, ceria, or tantalum oxide. Here, the third layer 250 is formed of a layer not including silica.

The method of forming the third layer 250 is not particularly limited. A film of the third layer 250 may be formed, for example, by an evaporation method, a sputtering method, a CVD (chemical vapor deposition) method, and so forth.

### (Step S140)

Subsequently, a ZrO₂ doped SiO₂ layer (the so-called outermost layer 260) is formed immediately above the third layer 250.

The zirconia doping amount in the outermost layer 260 is in the range from 5 at% to 50 at%. A film of the outermost layer 260 is formed by a sputtering method, according to claim 11.

In particular, among the sputtering methods, a cylindrical magnetron sputtering method is used. In this "cylindrical magnetron sputtering method," a hollow cylindrical target is used, instead of a usual planar target. While rotating the hollow cylindrical target in an extending axis direction, sputtering film formation is performed (e.g., Japanese Patent No. 4639764).

As described in detail below, for a case of forming a film of the outermost layer 260 by the "cylindrical magnetron sputtering method," adhesion of debris (foreign matter) to the laminated film is significantly suppressed. Consequently, a glass with a antireflection film can be obtained, which has fewer defects.

### (Step S150)

Subsequently, if it is necessary, the glass substrate 220 with the first surface 222 on which the laminated film 230 (the first layer 240, the second layer 245, the third layer 250, and the outermost layer 260) is formed is thermally processed. The thermal processing is performed to reinforce the glass substrate 220, or to bend the glass substrate 220. However, this step may be omitted.

The thermal processing is performed under the air atmosphere, for example, in a temperature range from 550 °C to 700 °C. The thermal processing may be performed, for example, by rapidly cooling, by air blowing, the glass substrate 220 that has been heated to 650 °C.

By the above-described processes, the glass with the antireflection film can be produced, which is formed of the glass substrate 220, and the laminated film 230.

The example of the manufacturing method of the glass with the antireflection film according to the embodiment of the present invention is described above. Here, it is apparent to a person ordinarily skilled in the art that the above description is merely an example, and that the glass with the antireflection film according to the embodiment of the present invention can be produced by another method. For example, in the above description, it is described by exemplifying the case where only the film of the outermost layer 260 is formed by the cylindrical magnetron sputtering method; however, at least one film of the first layer to the third layer may further be formed by the cylindrical magnetron sputtering method.

Furthermore, in the above description, by exemplifying the structure where the fourth layer 255 of the laminated film 230 is omitted in the glass 200 with the second antireflection film, which is illustrated in FIG. 3, the manufacturing method thereof is described. However, it is apparent to a person ordinarily skilled in the art that the above-described first manufacturing method can be similarly applied to the glass with the antireflection film, which includes a laminated film with another structure.

### [Embodiments]

Next, embodiments of the present invention are described. Note that, in the description below, example 1 to example 4 are the embodiments; and example 5 to example 7 are comparative examples.

### (Example 1)

A laminated film was formed on one surface of a glass substrate by the following method, and a sample of a glass with an antireflection film (which is referred to as the "sample according to example 1," hereinafter) was produced.

The sample according to example 1 was produced as follows.

First, a glass substrate (a soda-lime glass) with a length of 25 mm × a width of 50 mm × a thickness of 2 mm was prepared.

Subsequently, a laminated film formed of four layers in total, which were a first layer to a fourth layer, was formed on one surface of the glass substrate by a sputtering method. The laminated film had the following layer structure, from the side close to the glass substrate:
a first layer: a TiO₂ layer with a thickness of 11 nm,
a second layer: a SiO₂ layer with a thickness of 31 nm,
a third layer: a TiO₂ layer with a thickness of 99 nm, and
a fourth layer: a 90 at% SiO₂ - 10 at% ZrO₂ layer with a thickness of 83 nm.
For the first layer, a TiOx target (x < 2) (product name TXO Target: produced by AGC CERAMICS CO., LTD) was used as a target, and a film was formed by the sputtering method under Ar + O₂ atmosphere (oxygen 8 vol%). The sputtering pressure was 0.37 Pa.

For the second layer, a Si target was used as a target, and a film was formed by the sputtering method under Ar + O₂ atmosphere (oxygen 60 vol%). The sputtering pressure was 0.17 Pa.

For the third layer, the above-described TiOx target (x < 2) was used, and a film was formed by the sputtering method under Ar + O₂ atmosphere (oxygen 8 vol%). The sputtering pressure was 0.37 Pa.

For the fourth layer, a 10 at% Zr doped Si target was used as a target, and a film was formed by the sputtering method under Ar + O₂ atmosphere (oxygen 60 vol%). The sputtering pressure was 0.12 Pa.

Here, on the surface of the glass substrate at the side where the laminated film was not formed, antireflection processing (surface roughing processing) was performed.

### (Example 2)

A sample of a glass with an antireflection film (which is referred to as the "sample according to example 2," hereinafter) was produced by the method that was the same as the method of example 1. However, in example 2, the laminated film had the following layer structure:
a first layer: a TiO₂ layer with a thickness of 13 nm,
a second layer: a SiO₂ layer with a thickness of 28 nm,
a third layer: a TiO₂ layer with a thickness of 97 nm, and
a fourth layer: a 80 at% SiO₂ - 20 at% ZrO₂ layer with a thickness of 68 nm.

Here, for the fourth layer, a 20 at% Zr doped Si target was used as a target, and a film was formed by the sputtering method under Ar + O₂ atmosphere (oxygen 60 vol%). The sputtering pressure was 0.12 Pa.

### (Example 3)

A sample of a glass with an antireflection film (which is referred to as the "sample according to example 3," hereinafter) was produced by the method that was the same as the method of example 1. However, in example 3, the laminated film had the following layer structure:
a first layer: a TiO₂ layer with a thickness of 16 nm,
a second layer: a SiO₂ layer with a thickness of 25 nm,
a third layer: a TiO₂ layer with a thickness of 65 nm, and
a fourth layer: a 67 at% SiO₂ - 33 at% ZrO₂ layer with a thickness of 76 nm.

Here, for the fourth layer, a 20 at% Zr doped Si target was used as a target, and a film was formed by the sputtering method under Ar + O₂ atmosphere (oxygen 60 vol%). The sputtering pressure was 0.12 Pa.

### (Example 4)

A sample of a glass with an antireflection film (which is referred to as the "sample according to example 4," hereinafter) was produced by the method that was the same as the method of example 1. However, in example 4, identical laminated films were formed on both surfaces of the glass substrate (consequently, antireflection processing (surface roughing process) was not performed on the glass substrate). Each laminated film had the following layer structure:
a first layer: a TiO₂ layer with a thickness of 12 nm,
a second layer: a SiO₂ layer with a thickness of 30 nm,
a third layer: a TiO₂ layer with a thickness of 99 nm, and
a fourth layer: a 90 at% SiO₂ - 10 at% ZrO₂ layer with a thickness of 81 nm.

### (Example 5)

A sample of a glass with an antireflection film (which is referred to as the "sample according to example 5," hereinafter) was produced by the method that was the same as the method of example 1. However, in example 5, the laminated film had the following layer structure:
a first layer: a TiO₂ layer with a thickness of 13 nm,
a second layer: a SiO₂ layer with a thickness of 28 nm,
a third layer: a TiO₂ layer with a thickness of 97 nm, and
a fourth layer: a SiO₂ layer with a thickness of 81 nm.

Here, for the fourth layer, a Si target was used as a target, and a film was formed by the sputtering method under Ar + O₂ atmosphere (oxygen 60 vol%). The sputtering pressure was 0.17 Pa.

### (Example 6)

A sample of a glass with an antireflection film (which is referred to as the "sample according to example 6," hereinafter) was produced by the method that was the same as the method of example 1. However, in example 6, identical laminated films were formed on both surfaces of the glass substrate (consequently, antireflection processing (surface roughing process) was not performed on the glass substrate). Each laminated film had the following layer structure:
a first layer: a TiO₂ layer with a thickness of 11 nm,
a second layer: an Al doped SiO₂ layer with a thickness of 31 nm,
a third layer: a TiO₂ layer with a thickness of 97 nm, and
a fourth layer: an Al doped SiO₂ layer with a thickness of 86 nm.

Here, for the second layer, a 10 wt% Al doped Si target was used as a target, and a film was formed by the sputtering method under Ar + O₂ atmosphere (oxygen 60 vol%). The sputtering pressure was 0.17 Pa.

For the fourth layer, a film was formed under a film forming condition that is the same as the film forming condition of the second layer.

### (Example 7)

A sample of a glass with an antireflection film (which is referred to as the "sample according to example 7," hereinafter) was produced by the method that was the same as the method of example 1. However, in example 7, the laminated film had the following layer structure:
a first layer: a TiO₂ layer with a thickness of 11 nm,
a second layer: a SiO₂ layer with a thickness of 30 nm,
a third layer: a TiO₂ layer with a thickness of 103 nm,
a fourth layer: a SiO₂ layer with a thickness of 17 nm, and
a fifth layer: a 90 at% SiO₂ - 10 at% ZrO₂ layer with a thickness of 60 nm.

Here, for the fifth layer, a 10 at% Zr doped Si target was used as a target, and a film was formed by the sputtering method under Ar + O₂ atmosphere (oxygen 60 vol%). The sputtering pressure was 0.12 Pa.

### (Evaluation)

Alkali-resistant properties were evaluated by using each of the samples according to example 1 to example 7 produced by the above-described method. Evaluation of the alkali-resistant properties was made by the following alkali resistance test.

### (Alkali resistance test)

For each sample, light was irradiated from the side on which the laminated film was located (from either side for the samples according to example 4 and example 6), and reflectivity (initial reflectivity) was measured by a spectrophotometer.

Subsequently, each sample was dipped for two hours in an aqueous solution of NaOH with concentration of 0.1 kmol/m³, which was heated at 90 °C. After that, the samples were taken out from the aqueous solution, the samples were washed with pure water, and the samples were dried.

By using the dried samples, measurement was made, which was the same as the measurement prior to the dipping process; and the reflectivity was measured (the reflectivity after processing).

For each sample, the alkali-resistant property was evaluated by comparing the initial reflectivity with the reflectivity after processing.

### (Visible light reflectivity)

It can be said that, as the visible light reflectivity of the glass with the antireflection film becomes lower, the low reflection property becomes better.

Under the condition where a laminated film is formed only on one surface of the glass substrate, and the surface roughing process is performed on the other surface, if the visible light reflectivity of the glass with the antireflection film that is measured based on JIS R 3106 exceeds 1%, the low reflection property is insufficient. It is preferable that the visible light reflectivity be less than or equal to 1%.

Under the condition where laminated films are formed on both surfaces of the glass substrate, if the visible light reflectivity of the glass with the antireflection film that is measured based on JIS R 3106 exceeds 2%, the low reflection property is insufficient. It is preferable that the visible light reflectivity be less than or equal to 2%. In particular, it is preferable that the visible light reflectivity be less than or equal to 1%.

### (Reflected color)

In general, a glass with an antireflection film where a reflected color is a reddish color or an orange color tends not to be favored, while a glass with an antireflection film where a reflected color is a blue color or a green color tends to be favored. However, even if the reflected color is a blue color or a green color, it tends not be favored if the colorfulness is too strong.

If a reflected color in a 10 degree visual field in the standard illuminant D65 is represented by color coordinates (a*, b*) of the L*a*b color system according to JIS Z 8729, it is desirable that the reflected color of the glass with the antireflection film is inside a pentagon with five apexes, which are (0, 0), (20, -20), (-15, -20), (-15, 10), and (0, 10). In this case, the reflected color of the glass with the antireflection film is not a reddish color nor an orange color, and the colorfulness is not too strong.

### (Result)

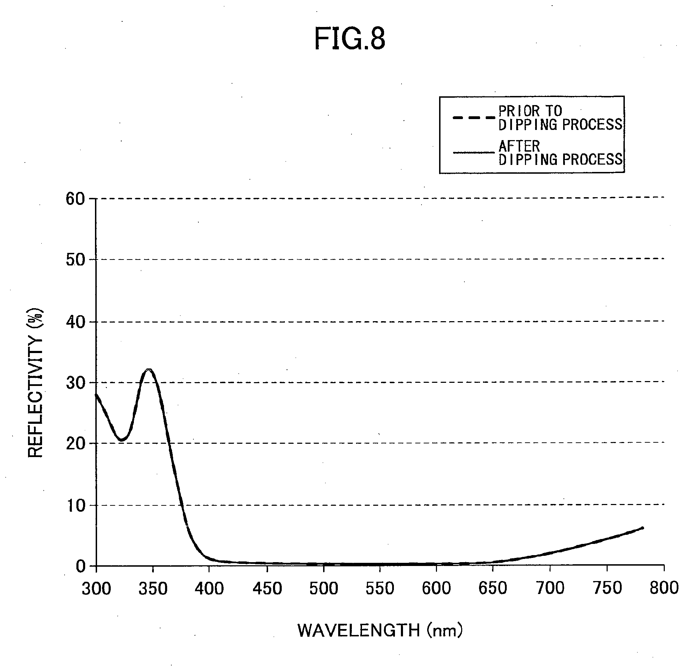

FIG. 8 shows a result of the alkali resistant test that was obtained for the sample according to example 1.

As shown in FIG. 8, for the sample according to example 1, the characteristic of the reflectivity prior to the dipping process almost matches the characteristic of the reflectivity after the dipping process, so that no significant difference was found between them. Namely, it was found that, for both cases of prior to and after the dipping process, the sample according to example 1 exhibits sufficiently low reflectivity in a wavelength range from approximately 400 nm to approximately 650 nm. As shown in Table 2, the visible light reflectivity of the sample according to example 1 prior to and after the dipping process were 0.26% and 0.26%, respectively. Namely, the visible light reflectivity of the sample according to example 1 was less than or equal to 1% for both prior to and after the dipping process.

In this manner, it was confirmed that the sample according to example 1 has a favorable alkali-resistant property.

Additionally, as shown in Table 2, the reflected colors (a*, b*) of the sample according to example 1 prior to and after the dipping process were (- 0.47, - 4.14) and (- 0.45, - 3.61), respectively. Namely, both reflected colors of the sample according to example 1 prior to and after the dipping process were inside the above-described pentagon.

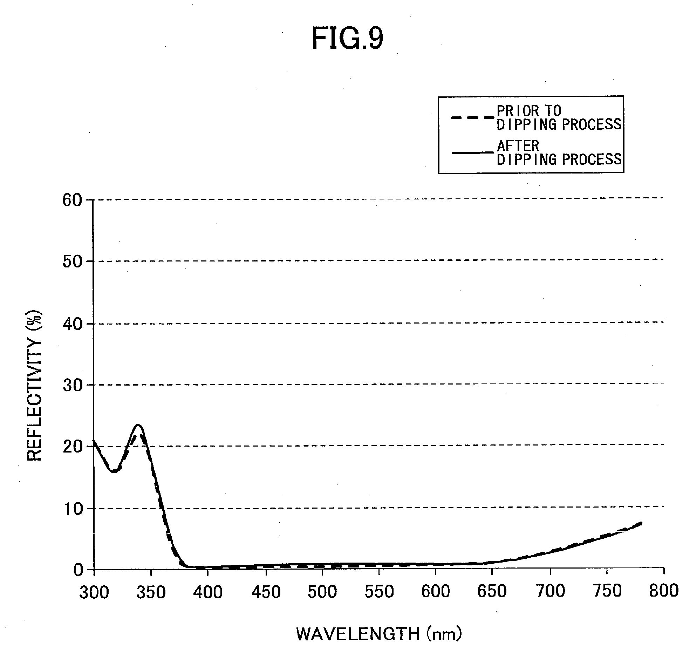

FIG. 9 shows a result of the alkali resistant test that was obtained for the sample according to example 2.

As shown in FIG. 9, for the sample according to example 2, the characteristic of the reflectivity prior to the dipping process almost matches the characteristic of the reflectivity after the dipping process, so that no significant difference was found between them. Namely, it was found that, for both cases of prior to and after the dipping process, the sample according to example 2 demonstrates sufficiently low reflectivity in a wavelength range from approximately 400 nm to approximately 650 nm. As shown in Table 2, the visible light reflectivity of the sample according to example 2 prior to and after the dipping process were 0.87% and 0.90%, respectively. Namely, the visible light reflectivity of the sample according to example 2 was less than or equal to 1% for both prior to and after the dipping process.

In this manner, it was confirmed that the sample according to example 2 has a favorable alkali-resistant property.

Additionally, as shown in Table 2, the reflected colors (a*, b*) of the sample according to example 2 prior to and after the dipping process were (- 3.35, 0.75) and (- 2.28, - 1.03), respectively. Namely, both reflected colors of the sample according to example 2 prior to and after the dipping process were inside the above-described pentagon.

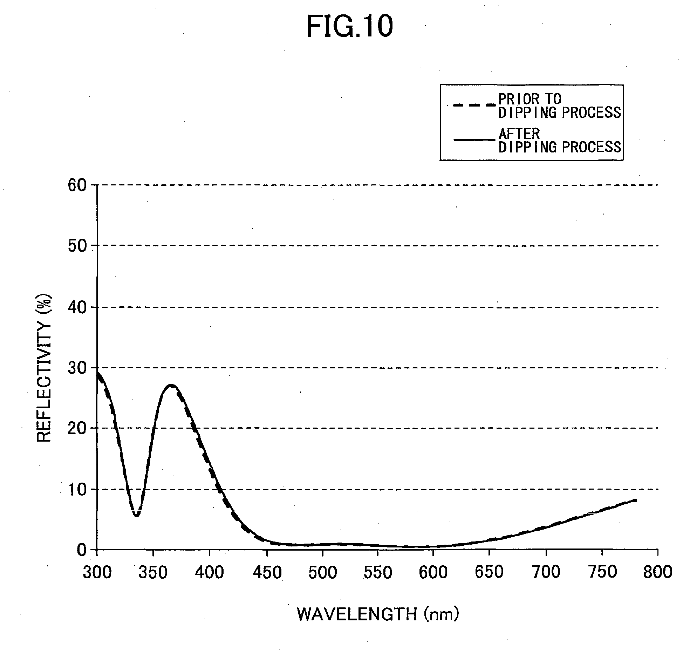

FIG. 10 shows a result of the alkali resistant test that was obtained for the sample according to example 3.

As shown in FIG. 10, for the sample according to example 3, the characteristic of the reflectivity prior to the dipping process almost matches the characteristic of the reflectivity after the dipping process, so that no significant difference was found between them. Namely, it was found that, for both cases of prior to and after the dipping process, the sample according to example 3 exhibits sufficiently low reflectivity in a wavelength range from approximately 450 nm to approximately 650 nm. As shown in Table 2, the visible light reflectivity of the sample according to example 2 prior to and after the dipping process were 0.71% and 0.70%, respectively. Namely, the visible light reflectivity of the sample according to example 3 was less than or equal to 1% for both prior to and after the dipping process.

In this manner, it was confirmed that the sample according to example 3 has a favorable alkali-resistant property.

Additionally, as shown in Table 2, the reflected colors (a*, b*) of the sample according to example 3 prior to and after the dipping process were (9.98, -15.44) and (11.02, - 17.86), respectively. Namely, both reflected colors of the sample according to example 3 prior to and after the dipping process were inside the above-described pentagon.

Here, the visible light reflectivity of example 1 through the visible light reflectivity of example 3 are compared. The outer most layers of example 1 through example 3 are the 90 at% SiO₂ - 10 at% ZrO₂ layer, the 80 at% SiO₂ - 20 at% ZrO₂ layer, and the 67 at% SiO₂ - 33 at% ZrO₂ layer, respectively. It can be seen that the visible light reflectivity of example 1 is the lowest, in which the 90 at% SiO₂ - 10 at% ZrO₂ layer, which has the lowest refractive index, is the outermost layer, so that a favorable low reflection property is achieved.

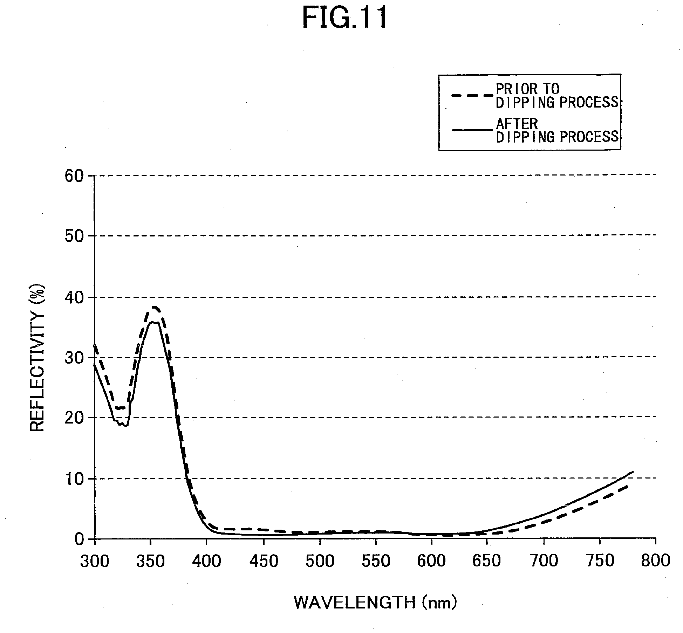

FIG. 11 shows a result of the alkali resistant test that was obtained for the sample according to example 4.

As shown in FIG. 11, for the sample according to example 4, the characteristic of the reflectivity prior to the dipping process almost matches the characteristic of the reflectivity after the dipping process, so that no significant difference was found between them. Namely, it was found that, for both cases of prior to and after the dipping process, the sample according to example 4 exhibits sufficiently low reflectivity in a wavelength range from approximately 450 nm to approximately 650 nm. As shown in Table 2, the visible light reflectivity of the sample according to example 4 prior to and after the dipping process were 0.77% and 0.74%, respectively. In the sample according to example 4, similar to example 1, the 90 at% SiO₂ - 10 at% ZrO₂ layer, which has a low refractive index as a ZrO₂ doped SiO₂ layer, is the outermost layer. Consequently, though the laminated films are formed on both surfaces of the glass substrate, the visible light reflectivity is less than or equal to 1%, which is less than 2%, and it can be seen that a favorable low reflection property is achieved.

In this manner, it was confirmed that the sample according to example 4 has a favorable alkali-resistant property.

Additionally, as shown in Table 2, the reflected colors (a*, b*) of the sample according to example 4 prior to and after the dipping process were (- 1.76, - 6.28) and (- 1.18, 2.34), respectively. Namely, both reflected colors of the sample according to example 4 prior to and after the dipping process were inside the above-described pentagon.

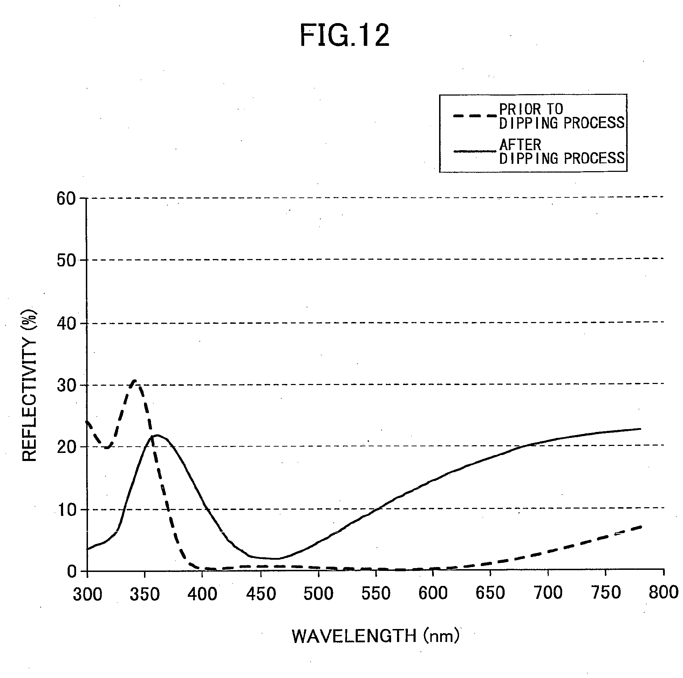

FIG. 12 shows a result of the alkali resistant test that was obtained for the sample according to example 5.

As shown in FIG. 12, for the sample according to example 5, a significant difference was found between the characteristic of the reflectivity prior to the dipping process and the characteristic of the reflectivity after the dipping process. Namely, though the sample according to example 5 exhibited a favorable low reflection property prior to the dipping process, it was found that, after the dipping process, the reflectivity increased over a wavelength range from approximately 400 nm to approximately 750 nm. As shown in Table 2, the visible light reflectivity of the sample according to example 5 prior to and after the dipping process were 0.27% and 10.35%, respectively.

In this manner, it was confirmed that the sample according to example 5 does not exhibit a favorable alkali-resistant property.

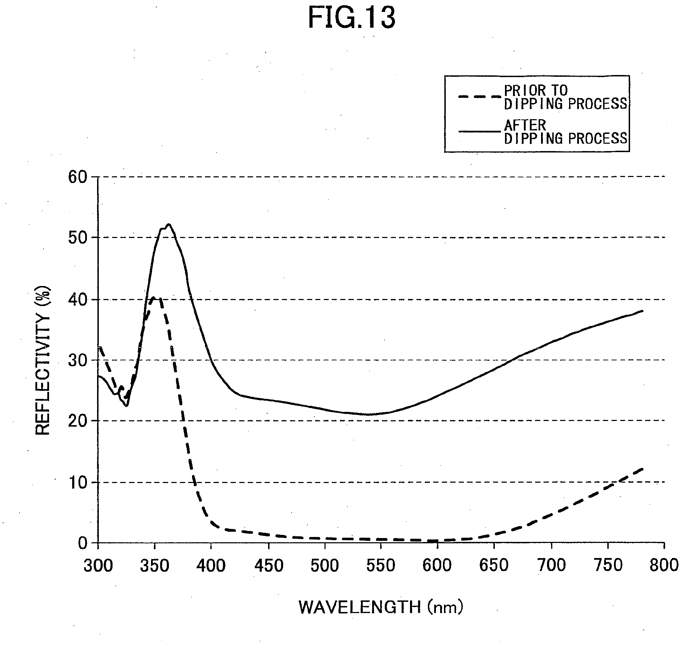

FIG. 13 shows a result of the alkali resistant test that was obtained for the sample according to example 6.

As shown in FIG. 13, for the sample according to example 6, a significant difference was found between the characteristic of the reflectivity prior to the dipping process and the characteristic of the reflectivity after the dipping process. Namely, though the sample according to example 6 exhibited a favorable low reflection property prior to the dipping process, it was found that, after the dipping process, the reflectivity increased over almost the entire wavelength range. As shown in Table 2, the visible light reflectivity of the sample according to example 6 prior to and after the dipping process were 0.55% and 22.47%, respectively.

In this manner, it was confirmed that the sample according to example 6 does not exhibit a favorable alkali-resistant property.

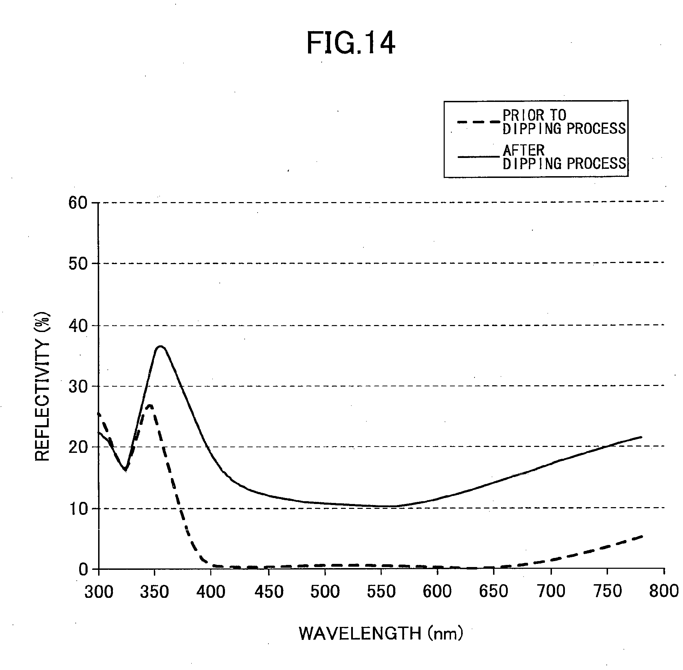

FIG. 14 shows a result of the alkali resistant test that was obtained for the sample according to example 7.

As shown in FIG. 14, for the sample according to example 7, a significant difference was found between the characteristic of the reflectivity prior to the dipping process and the characteristic of the reflectivity after the dipping process. Namely, though the sample according to example 7 exhibited a favorable low reflection property prior to the dipping process, it was found that, after the dipping process, the reflectivity increased over almost the entire wavelength range. As shown in Table 2, the visible light reflectivity of the sample according to example 7 prior to and after the dipping process were 0.43% and 10.81%, respectively.

In this manner, it was confirmed that the sample according to example 7 does not exhibit a favorable alkali-resistant property.

Table 1 below shows the specifications of the laminated films of the samples according to example 1 through example 7.

**[Table 1]**

| Example | Laminated film | | | | |
|---|---|---|---|---|---|
| | First layer | Second layer | Third layer | Fourth layer | Fifth layer |
| 1 | TiO₂ 11 nm | SiO₂ 31 nm | TiO₂ 99 nm | 10 at% ZrO₂ doped SiO₂ 83 nm | - |
| 2 | TiO₂ 13 nm | SiO₂ 28 nm | TiO₂ 97 nm | 20 at% ZrO₂ doped SiO₂ 68 nm | - |
| 3 | TiO₂ 16 nm | SiO₂ 25 nm | TiO₂ 65 nm | 33 at% ZrO₂ doped SiO₂ 76 nm | - |
| 4* | TiO₂ 12 nm | SiO₂ 30 nm | TiO₂ 99 nm | 10 at% ZrO₂ doped SiO₂ 81 nm | - |
| 5 | TiO₂ 13 nm | SiO₂ 28 nm | TiO₂ 97 nm | SiO₂ 81 nm | - |
| 6* | TiO₂ 11 nm | 10 wt% Al doped SiO₂ 31 nm | TiO₂ 97 nm | 10 wt% Al doped SiO₂ 86 nm | - |
| 7 | TiO₂ 11 nm | SiO₂ 30 nm | TiO₂ 103 nm | SiO₂ 17 nm | 10 at% ZrO₂ doped SiO₂ 60 nm |

| | | | | | |
|---|---|---|---|---|---|
| *: For examples 4 and 6, laminated films having the same structures are formed on both surfaces of the glass substrate. | | | | | |

Table 2 below collectively shows the visible light reflectivity; the color coordinates a*, b*; and the results of the alkali resistance test of the samples according to example 1 through example 7 prior to and after the dipping process. The visible light reflectivity represents values that were measured based on JIS R 3106. Further, the color coordinates a*, b* represent the reflected colors in the 10 degree visual field in the standard illuminant D65, and they are based on the L*a*b* color system according to JIS Z 8729.

**[Table 2]**

| Examples | Prior to dipping | | | After dipping | | | Alkali-resistant property |
|---|---|---|---|---|---|---|---|
| | Visible light reflectivity (%) | a* | b* | Visible light reflectivity (%) | a* | b* | |
| 1 | 0.26 | -0.47 | -4.14 | 0.26 | -0.45 | -3.61 | Favorable |
| 2 | 0.87 | -3.35 | 0.75 | 0.90 | -2.84 | -1.03 | Favorable |
| 3 | 0.71 | 9.98 | -15.44 | 0.70 | 11.02 | -17.86 | Favorable |
| 4 | 0.77 | -1.76 | -6.28 | 0.74 | -1.18 | 2.34 | Favorable |
| 5 | 0.27 | 5.04 | -5.79 | 10.35 | 12.35 | 30.43 | Not good |
| 6 | 0.55 | 5.89 | -10.96 | 22.47 | 5.65 | -1.64 | Not good |
| 7 | 0.43 | -4.90 | 2.16 | 10.81 | 5.91 | -3.85 | Not good |

As described above, for the samples according to example 1 through example 4, which adopt the glass with the antireflection film according to the present invention, it was confirmed that the alkali-resistant property was significantly enhanced.

### (Productivity evaluation)

Next, the glass with the antireflection film according to the embodiment of the present invention was continuously manufactured, and the productivity was evaluated.

The glass with the antireflection film had a structure such that a laminated film with a four-layer structure, which was similar to that of above-described example 1, was formed on a first surface of a glass substrate (formed of soda-lime glass) having a length/width size of 254 cm x 366 cm (100 inches x 144 inches). Here, a condition of the structure of each layer was as follows:
a first layer: a TiO₂ layer with a thickness of 12 nm,
a second layer: a SiO₂ layer with a thickness of 35 nm,
a third layer: a TiO₂ layer with a thickness of 105 nm,
a fourth layer (the outermost layer): a 90 at% SiO₂ - 10 at% ZrO₂ layer with a thickness of 84 nm.

Among these, a film of the first layer was formed by a sputtering method in which a usual flat TiOx target (x < 2) was used. Furthermore, films of the second layer through the fourth layer were formed by a cylindrical magnetron sputtering method in which a cylindrical target was used.

The glass with the antireflection film was continuously manufactured by conveying the glass substrate having the above-described size toward inside a single coater by rollers. The atmosphere inside the coater was the Ar + O₂ atmosphere.

Within approximately 4 days of continuous discharge including adjustment of a thickness of each layer, 290 glasses with the antireflection films were manufactured in total in the latter half of approximately 1.5 days. For the total number of the glasses with the antireflection films, adhesion of debris on the surface and presence or absence of defects in the laminated film were visually observed. As a result, there was no product evaluated as manufacturing failure, and a rate of defective products was zero.

In this manner, it was confirmed that, for the glass with the antireflection film that was produced by the above-described method, there were few defects, and a high yield rate could be obtained.

### (Evaluation of heat resistance)

Next, heat resistance of the glass with the antireflection film according to the present invention was evaluated.

As a sample for the evaluation, the glass with the antireflection film having the length/width size of 254 cm x 366 cm (100 inches x 144 inches) was used, which was manufactured in the above-described paragraph of "productivity evaluation".

After the glass with the antireflection film was heated to 650 °C in the air, the glass with the antireflection film was cooled to the room temperature by air blowing. A haze of the glass with the antireflection film prior to and after heating was measured by a haze meter.

As a result of the measurement of the haze, the haze of the glass with the antireflection film prior to heating was 0.09%. Whereas, the haze of the glass with the antireflection film after heating was 0.35%, and it was found that, even if a thermal process is applied, an increase in the haze can be significantly suppressed.

In this manner, it was confirmed that the glass with the antireflection film that was manufactured by the above-described manufacturing method had favorable heat resistance.

The present invention can be applied, for example, to a glass with an antireflection film for a building. The configuration for using it is not limited to a configuration where the antireflection film is formed only on a single surface of the glass substrate, and a configuration where the antireflection films are formed on both surfaces of the glass substrate. For example, two glass substrates, in each of which an antireflection film is formed only on a single surface, may be prepared, and a laminated glass may be formed. Alternatively, two glass substrates, in each of which antireflection films are formed on both surfaces, may be prepared, and a multilayered glass may be formed. Alternatively, in a glass substrate where an antireflection film is formed only on a single surface, a film having another effect may be formed on the other surface.

The present application is based on and claims the benefit of priority of Japanese Priority Application No. 2013-259650 filed on December 16, 2013.

### DESCRIPTION OF THE REFERENCE NUMERALS

10 Usual glass with antireflection film
20 Glass substrate
22 First surface
24 Second surface
30 Laminated film
40 First layer
45 Second layer
50 Third layer
55 Fourth layer
100 Glass with first antireflection film
120 Glass substrate
122 First surface
124 Second surface
130 Laminated film
140 First layer
145 Second layer
160 Outermost layer
200 Glass with second antireflection film
220 Glass substrate
222 First surface
224 Second surface
230 Laminated film
240 First layer
245 Second layer
250 Third layer
255 Fourth layer
260 Outermost layer
300 Glass with third antireflection film according to the present invention
320 Glass substrate
322 First surface
324 Second surface
330 First laminated film
340 First layer (first laminated film)
345 Second layer (first laminated film)
350 Third layer (first laminated film)
360 First outermost layer
365 Second laminated film
370 First layer (second laminated film)
375 Second layer (second laminated film)
380 Third layer (second laminated film)
390 Second outermost layer
400 Glass with fourth antireflection film
420 Glass substrate
422 First surface
424 Second surface
430 Laminate film
440 First layer
445 Second layer
460 Outermost layer
500 Glass with fifth antireflection film
520 Glass substrate
522 First surface
524 Second surface
530 Laminated film
540 First layer
545 Second layer
550 Third layer
555 Fourth layer
560 Outermost layer
600 Glass with sixth antireflection film
620 Glass substrate
622 First surface
624 Second surface
630 First laminated film
640 First layer (first laminated film)
645 Second layer (first laminated film)
650 Third layer (first laminated film)
660 First outermost layer
665 Second laminated film
670 First layer (second laminated film)
675 Second layer (second laminated film)
680 Third layer (second laminated film)
690 Second outermost layer

## Claims

1. A glass with an antireflection film, wherein the glass with the antireflection film includes a glass substrate having a first surface and a second surface, and a first laminated film located on the first surface of the glass substrate,
wherein the first laminated film includes, from a side close to the first surface of the glass substrate, a first layer, a second layer, a third layer, and an outermost layer,
wherein the second layer is located adjacent to the first layer,
wherein the third layer includes a material selected from a group formed of titania, niobium oxide, zirconia, ceria, and tantalum oxide,
wherein the outermost layer is formed of zirconia-doped silica, wherein the zirconia doping amount is in a range from 5 at% to 50 at%,
wherein the third layer that does not include silica is located immediately below the outermost layer,
wherein the second layer has a refractive index that is less than the refractive index of the first layer,
wherein the third layer has a refractive index that is greater than the refractive index of the second layer, which is located immediately below, and
wherein the first layer is located on the first surface of the glass substrate.

2. The glass with the antireflection film according to claim 1, wherein the first layer has the refractive index that is greater than or equal to 2.0, and
wherein the second layer has the refractive index that is in a range from 1.4 to 1.8.

3. The glass with the antireflection film according to claim 1 or 2, wherein the first layer includes a material selected from a group formed of titania, niobium oxide, zirconia, ceria, and tantalum oxide.

4. The glass with the antireflection film according to any one of claims 1 to 3, wherein the second layer includes silica or alumina.

5. The glass with the antireflection film according to any one of claims 1 to 4, wherein, in a state where surface roughing processing is applied to the second surface of the glass substrate, visible light reflectivity of the glass with the antireflection film that is measured based on JIS R 3106 is less than or equal to 1%.

6. The glass with the antireflection film according to any one of claims 1 to 4, wherein the glass with the antireflection film includes a second laminated film on the second surface of the glass substrate.

7. The glass with the antireflection film according to claim 6, wherein visible light reflectivity of the glass with the antireflection film that is measured based on JIS R 3106 is less than or equal to 2%.

8. The glass with the antireflection film according to claim 6 or 7, wherein the second laminated film includes an outermost layer formed of zirconia-doped silica.

9. The glass with the antireflection film according to any one of claims 6 to 8, wherein the second laminated film has a layer structure that is the same as a layer structure of the first laminated film.

10. The glass with the antireflection film according to any one of claims 1 to 9, wherein, when a reflected color in a 10 degree visual field in a standard illuminant D65 is represented by color coordinates (a*, b*) of a L*a*b* color system according to JIS Z 8729, the reflected color is inside a pentagon with five apexes, which are (0, 0), (20, -20), (-15, -20), (-15, 10), and (0, 10).

11. A manufacturing method of a glass with an antireflection film, the method comprising:
(1) a step of forming a first layer on a first surface of a glass substrate;
(2) a step of forming a second layer immediately above the first layer, wherein the second layer has a refractive index that is less than the refractive index of the first layer;
(3) a step of forming a third layer immediately above the second layer, wherein the third layer includes a material selected from a group formed of titania, niobium oxide, zirconia, ceria, and tantalum oxide and does not include silica, and wherein the third layer has a refractive index that is greater than the refractive index of the second layer, which is located immediately below;
(4) a step of forming an outermost layer formed of zirconia-doped silica immediately above the third layer, wherein the outermost layer formed of zirconia-doped silica is formed by a cylindrical magnetron sputtering method and the zirconia doping amount is in a range from 5 at% to 50 at%.

12. The manufacturing method according to claim 11, further comprising, after the step (4):
(5) a step of thermally processing the glass substrate at a temperature less than or equal to 700 °C.

13. The manufacturing method according to claim 11 or 12, wherein the second layer has a refractive index that is less than a refractive index of the first layer and a refractive index of the third layer.

## Patentansprüche

1. Glas mit einem Antireflexionsfilm, wobei das Glas mit dem Antireflexionsfilm ein Glassubstrat mit einer ersten Oberfläche und einer zweiten Oberfläche und einen ersten laminierten Film, angeordnet auf der ersten Oberfläche des Glassubstrats, einschließt,
wobei der erste laminierte Film, von einer Seite nahe zu der ersten Oberfläche des Glassubstrats, eine erste Schicht, eine zweite Schicht, eine dritte Schicht und eine äußerste Schicht einschließt,
wobei die zweite Schicht angrenzend an die erste Schicht angeordnet ist, wobei die dritte Schicht ein Material einschließt, ausgewählt aus einer Gruppe, gebildet aus Titanoxid, Nioboxid, Zirkonoxid, Ceroxid und Tantaloxid,
wobei die äußerste Schicht aus Zirkonoxid-dotiertem Siliciumoxid gebildet ist, wobei die Zirkonoxiddotiermenge in einem Bereich von 5 Atom% bis 50 Atom% ist,
wobei die dritte Schicht, welche nicht Siliciumoxid einschließt, unmittelbar unter der äußersten Schicht angeordnet ist,
wobei die zweite Schicht einen Brechungsindex aufweist, der niedriger als der Brechungsindex der ersten Schicht ist,
wobei die dritte Schicht einen Brechungsindex aufweist, der größer als der Brechungsindex der zweiten Schicht ist, welche unmittelbar darunter angeordnet ist, und
wobei die erste Schicht auf der ersten Oberfläche des Glassubstrats angeordnet ist.

2. Glas mit dem Antireflexionsfilm gemäß Anspruch 1, wobei die erste Schicht einen Brechungsindex aufweist, der größer als oder gleich 2,0 ist, und
wobei die zweite Schicht einen Brechungsindex aufweist, der in einem Bereich von 1,4 bis 1,8 liegt.

3. Glas mit dem Antireflexionsfilm gemäß Anspruch 1 oder 2, wobei die erste Schicht ein Material einschließt, ausgewählt aus einer Gruppe, gebildet aus Titanoxid, Nioboxid, Zirkonoxid, Ceroxid und Tantaloxid.

4. Glas mit dem Antireflexionsfilm gemäß einem der Ansprüche 1 bis 3, wobei die zweite Schicht Siliciumoxid oder Aluminiumoxid einschließt.

5. Glas mit dem Antireflexionsfilm gemäß einem der Ansprüche 1 bis 4, wobei in einem Zustand, bei welchem Oberflächenrauigkeitsverarbeiten auf die zweite Oberfläche des Glassubstrats angewendet wird, das Reflexionsvermögen bezüglich sichtbarem Licht des Glases mit dem Antireflexionsfilm, welches auf der Basis von JIS R 3106 gemessen wird, weniger als oder gleich 1% ist.

6. Glas mit dem Antireflexionsfilm gemäß einem der Ansprüche 1 bis 4, wobei das Glas mit dem Antireflexionsfilm einen zweiten laminierten Film auf der zweiten Oberfläche des Glassubstrats einschließt.

7. Glas mit dem Antireflexionsfilm gemäß Anspruch 6, wobei das Reflexionsvermögen bezüglich sichtbarem des Glases mit dem Antireflexionsfilm, welches auf der Basis von JIS R 3106 gemessen wird, weniger als oder gleich 2% ist.

8. Glas mit dem Antireflexionsfilm gemäß Anspruch 6 oder 7, wobei der zweite laminierte Film eine äußerste Schicht gebildet aus Zirkoniumoxid dotierten Siliciumoxid einschließt.

9. Glas mit dem Antireflexionsfilm gemäß einem der Ansprüche 6 bis 8, wobei der zweite laminierte Film eine Schichtstruktur aufweist, die gleich wie die Schichtstruktur des ersten laminierten Films ist.

10. Glas mit dem Antireflexionsfilm gemäß einem der Ansprüche 1 bis 9, wobei, wenn eine reflektierte Farbe in einem 10 Grad Sichtfeld in einer Standardilluminante D65 durch Farbkoordinaten (a*, b*) eines L*a*b* Farbsystems gemäß JIS Z 8729 dargestellt wird, die reflektierte Farbe innerhalb eines Fünfecks mit fünf Apizes ist, welche (0,0), (20, -20), (-15, -20), (-15, 10) und (0, 10) sind.

11. Herstellungsverfahren eines Glases mit einem Antireflexionsfilm, wobei das Verfahren umfaßt:
(1) einen Schritt des Bildens einer ersten Schicht auf einer ersten Oberfläche eines Glassubstrats,
(2) einen Schritt des Bildens einer zweiten Schicht unmittelbar oberhalb der ersten Schicht,
wobei die zweite Schicht einen Brechungsindex aufweist, der niedriger als der Brechungsindex der ersten Schicht ist,
(3) einen Schritt des Bildens einer dritten Schicht unmittelbar oberhalb der zweiten Schicht, wobei die dritte Schicht ein Material einschließt, ausgewählt aus einer Gruppe, gebildet aus Titanoxid, Nioboxid, Zirkonoxid, Ceroxid und Tantaloxid, und kein Siliciumoxid einschließt, und wobei die dritte Schicht einen Brechungsindex aufweist, der größer als der Brechungsindex der zweiten Schicht ist, welche unmittelbar darunter angeordnet ist,
(4) einen Schritt des Bildens einer äußersten Schicht, gebildet aus Zirkonoxid-dotiertem Siliciumoxid, unmittelbar oberhalb der dritten Schicht, wobei die äußerste Schicht, gebildet aus Zirkonoxid-dotiertem Siliciumoxid, durch ein zylindrisches Magnetronsputterverfahren gebildet worden ist und die Zirkonoxiddotiermenge in einem Bereich von 5 Atom% bis 50 Atom% ist.

12. Herstellungsverfahren gemäß Anspruch 11, weiter umfassend, nach dem Schritt (4):
(5) einen Schritt des thermischen Verarbeitens des Glassubstrats bei einer Temperatur von weniger oder gleich 700°C.

13. Herstellungsverfahren gemäß Anspruch 11 oder 12, wobei die zweite Schicht einen Brechungsindex aufweist, der niedriger als ein Brechungsindex der ersten Schicht und ein Brechungsindex der dritten Schicht ist.

## Revendications

1. Verre muni d'un film antireflet, dans lequel :
le verre qui est muni du film antireflet inclut un substrat en verre qui comporte une première surface et une seconde surface, et un premier film stratifié qui est localisé sur la première surface du substrat en verre ; dans lequel :
le premier film stratifié inclut, depuis un côté proche de la première surface du substrat en verre, une première couche, une deuxième couche, une troisième couche et une couche la plus externe ; dans lequel :
la deuxième couche est localisée de telle sorte qu'elle soit adjacente à la première couche ; dans lequel :
la troisième couche inclut un matériau qui est sélectionné parmi un groupe qui est formé par l'oxyde de titane, l'oxyde de niobium, l'oxyde de zirconium, l'oxyde de cérium et l'oxyde de tantale ; dans lequel :
la couche la plus externe est formée en dioxyde de silicium dopé à l'oxyde de zirconium, dans lequel la quantité de dopage en oxyde de zirconium s'inscrit à l'intérieur d'une plage qui va de 5 % en pourcentage atomique jusqu'à 50 % en pourcentage atomique ; dans lequel :
la troisième couche qui n'inclut pas de dioxyde de silicium est localisée immédiatement au-dessous de la couche la plus externe ; dans lequel :
la deuxième couche présente un indice de réfraction qui est inférieur à l'indice de réfraction de la première couche ; dans lequel :
la troisième couche présente un indice de réfraction qui est supérieur à l'indice de réfraction de la deuxième couche, laquelle est localisée immédiatement au-dessous ; et dans lequel :
la première couche est localisée sur la première surface du substrat en verre.

2. Verre muni du film antireflet selon la revendication 1, dans lequel :
la première couche présente un indice de réfraction qui est supérieur ou égal à 2,0 ; et dans lequel :
la deuxième couche présente un indice de réfraction qui s'inscrit à l'intérieur d'une plage qui va de 1,4 à 1,8.

3. Verre muni du film antireflet selon la revendication 1 ou 2, dans lequel la première couche inclut un matériau qui est sélectionné parmi un groupe qui est formé par l'oxyde de titane, l'oxyde de niobium, l'oxyde de zirconium, l'oxyde de cérium et l'oxyde de tantale.

4. Verre muni du film antireflet selon l'une quelconque des revendications 1 à 3, dans lequel la deuxième couche inclut du dioxyde de silicium ou de l'oxyde d'aluminium.

5. Verre muni du film antireflet selon l'une quelconque des revendications 1 à 4, dans lequel, dans un état dans lequel un traitement de rugosité de surface est appliqué sur la seconde surface du substrat en verre, la réflectivité en termes de lumière visible du verre qui est muni du film antireflet, laquelle réflectivité du verre est mesurée sur la base de JIS R 3106, est inférieure ou égale à 1 %.

6. Verre muni du film antireflet selon l'une quelconque des revendications 1 à 4, dans lequel le verre qui est muni du film antireflet inclut un second film stratifié sur la seconde surface du substrat en verre.

7. Verre muni du film antireflet selon la revendication 6, dans lequel la réflectivité en termes de lumière visible du verre qui est muni du film antireflet, laquelle réflectivité du verre est mesurée sur la base de JIS R 3106, est inférieure ou égale à 2 %.

8. Verre muni du film antireflet selon la revendication 6 ou 7, dans lequel le second film stratifié inclut une couche la plus externe qui est formée à base de dioxyde de silicium dopé à l'oxyde de zirconium.

9. Verre muni du film antireflet selon l'une quelconque des revendications 6 à 8, dans lequel le second film stratifié comporte une structure de couches qui est la même qu'une structure de couches du premier film stratifié.

10. Verre muni du film antireflet selon l'une quelconque des revendications 1 à 9, dans lequel, lorsqu'une couleur réfléchie dans un champ visuel de 10 degrés avec un illuminant standard D65 est représentée par des coordonnées de couleur (a*, b*) d'un système de couleurs L*a*b* conformément à JIS Z 8729, la couleur réfléchie est à l'intérieur d'un pentagone qui comporte cinq sommets qui sont (0, 0), (20, -20), (-15, -20), (-15, 10) et (0, 10).

11. Procédé de fabrication d'un verre muni d'un film antireflet, le procédé comprenant :
(1) une étape de formation d'une première couche sur une première surface d'un substrat en verre ;
(2) une étape de formation d'une deuxième couche immédiatement au-dessus de la première couche ; dans lequel la deuxième couche présente un indice de réfraction qui est inférieur à l'indice de réfraction de la première couche ;
(3) une étape de formation d'une troisième couche immédiatement au-dessus de la deuxième couche, dans lequel la troisième couche inclut un matériau qui est sélectionné parmi un groupe qui est formé par l'oxyde de titane, l'oxyde de niobium, l'oxyde de zirconium, l'oxyde de cérium et l'oxyde de tantale et n'inclut pas de dioxyde de silicium, et dans lequel la troisième couche présente un indice de réfraction qui est supérieur à l'indice de réfraction de la deuxième couche, laquelle est localisée immédiatement au-dessous ; et
(4) une étape de formation d'une couche la plus externe qui est formée en dioxyde de silicium dopé à l'oxyde de zirconium immédiatement au-dessus de la troisième couche, dans lequel la couche la plus externe qui est formée en dioxyde de silicium dopé à l'oxyde de zirconium est formée au moyen d'un procédé de pulvérisation par magnétron cylindrique et la quantité de dopage en oxyde de zirconium s'inscrit à l'intérieur d'une plage qui va de 5 % en pourcentage atomique à 50 % en pourcentage atomique.

12. Procédé de fabrication selon la revendication 11, comprenant en outre, après l'étape (4) :
(5) une étape de traitement thermique du substrat en verre à une température inférieure ou égale à 700 °C.

13. Procédé de fabrication selon la revendication 11 ou 12, dans lequel la deuxième couche présente un indice de réfraction qui est inférieur à un indice de réfraction de la première couche et à un indice de réfraction de la troisième couche.
